# EUROPEAN PATENT SPECIFICATION

(11) **EP 3 650 686 B1**
(45) Date of publication and mention of the grant of the patent: **15.02.2023**
(21) Application number: 19208566.0
(22) Date of filing: 12.11.2019
(51) Int. Cl.: F03D 13/25, F03D 13/40, B63B 75/00

(54) **DEVICE FOR SUPPORTING A NUMBER OF ELONGATE ELEMENTS IN LYING POSITION ON A DECK OF A VESSEL**
VORRICHTUNG ZUR UNTERSTÜTZUNG EINER ANZAHL LÄNGERER ELEMENTE IN LIEGEPOSITION AUF EINEM DECK EINES SCHIFFES
DISPOSITIF POUR SUPPORTER UN NOMBRE D'ÉLÉMENTS ALLONGÉS EN POSITION COUCHÉE SUR UNE PLATEFORME D'UN NAVIRE

(30) Priority: 12.11.2018 BE 201805794
(43) Date of publication of application: 13.05.2020
(73) Proprietor: DEME Offshore BE N.V., 2070 Zwijndrecht (BE)
(72) Inventor: VANNIEUWENHUYSE, Kenneth Gerard, 9040 Sint-Amandsberg (BE); MICHIELSEN, Jan Maria Koen, 2000 Antwerpen (BE); RABAUT, Dieter Wim Jan, 9000 Gent (BE)
(74) Representative: Brouwer, Hendrik Rogier

(56) References cited:
- EP-A1- 2 463 224
- WO-A1-2011/078685
- DE-U1-202009 006 507
- TW-A- 201 215 538

## Description

### TECHNICAL FIELD OF THE INVENTION

The invention relates to a device for supporting a number of elongate elements, for instance hollow tubular elements, in lying position on a deck of a vessel. The invention likewise relates to a method for moving within reach of a lifting crane provided on the deck of a vessel an element to be lifted by the lifting crane. The reach is generally bounded by a minimum and a maximum distance or radius, calculated from a rotation point of the lifting crane.

The invention will be elucidated hereinbelow in the light of the offshore placing of a wind turbine. The reference to a wind turbine does not imply that the invention is limited to the use in the context of such a wind turbine. The device and method can in principle be applied to any elongate element which is being supported on a deck of a vessel, and optionally has to be transported over sea in lying position.

### BACKGROUND OF THE INVENTION

An offshore wind turbine is generally placed on a support structure which is anchored to the seabed. The support structure can bridge the distance from the seabed to a position above the water surface and can be embodied in different ways. The support structure can thus comprise a single pile (a monopile) or be embodied as a lattice structure, also referred to as jacket. The support structure can be anchored to the bottom, for instance by means of arranging a pile foundation.

A jacket foundation is generally transported over sea in erected state. In a known method a jacket of a wind turbine provided with suction buckets is lifted onto the deck of a transport vessel and fixed with its legs onto the deck of the vessel. After arrival at the intended offshore location, the connection is broken and the jacket can be taken up and placed on the seabed with a lifting crane.

A monopile foundation is generally transported over sea in lying position. The transport can take place on a vessel which eventually also places the monopile on the seabed, or can be transported with a vessel configured specifically for this purpose. Monopiles form hollow tubular structures with a certain length, and it is usual to transport a plurality of monopiles at the same time and/or to manipulate them from the deck of a vessel.

For instance, DE 20 2009 006507 discloses a device for supporting a number of foundation piles in horizontal position on a deck of a vessel. The support structure comprises a plurality of mutually parallel elongated support structures, each comprising two support members spaced apart in a longitudinal direction of the support structure and connected to the deck for peripheral parts of the foundation pile.

In order to be able to transport monopiles in lying position in orderly manner the deck of a vessel is generally provided with a device which comprises a number of elongate support structures running mutually parallel. Each support structure is provided with a carrying surface which has roughly the same shape as a peripheral wall part of the monopile, which peripheral part is received in the support structure and supported by the carrying surface. Each monopile, or each elongate element in general, is here fixed with known means to the support structure. This manner of seafastening is known.

It is of great importance to be able to transport the greatest number of elements possible on the deck of the vessel. The available amount of deck space is however limited on a vessel. It is further a trend for the dimensions of elongate elements to be placed at sea (such as a monopile) to keep increasing, whereby the deck space has to be increased accordingly. The greater dimensions of the elements also necessitate the use of larger lifting cranes, and a lifting crane which was previously suitable will later be found to have an insufficient range of operation. This is understood to mean both the maximum load to be lifted and the reach of the lifting crane. The boom of a lifting crane can indeed be rotated through determined angles so that a circular area can be covered in the horizontal plane. This circular area is bounded by a minimum radius, wherein the boom of the lifting crane can be luffed in maximally as allowed by the design of the lifting crane, and a maximum radius wherein the boom of the lifting crane can be luffed out maximally as allowed by its design and a load to be lifted.

### SUMMARY OF THE INVENTION

The present invention has for its object to provide a device for supporting a number of elongate elements, for instance hollow tubular elements, in lying position on a deck of a vessel, wherein the above stated drawbacks of the prior art are at least partially obviated.

According to the invention, this object is achieved by providing a device according to claim 1. Particularly provided is a device for supporting a number of elongate elements (hollow tubular elements) in lying position on a deck of a vessel, comprising a number of elongate support structures which run mutually parallel and each comprise two support parts, placed at a mutual distance in a longitudinal direction of the support structure and connected to the deck, for peripheral parts of an element, wherein the device further comprises displacing means configured to displace an element received in a support structure relative to the deck and parallel to the deck in the lying position.

A number of advantages is achieved in this way. Providing the displacing means, which are configured to displace an element received in a support structure relative to the deck and parallel to the deck in the lying position, for instance makes it possible to move an element within reach of a lifting crane, which can then take up and erect the element and carry it to an end position. For a monopile, this is for instance a foundation anchored to the seabed. It can also be useful to displace an element relative to other elements present in the support structure in order to free up space for another element in the support structure.

For the sake of efficient use of the (limited) space on a deck of a vessel the elongate elements are preferably stored on the deck in a space-saving manner. A suitable storage manner relates to support structures which run parallel to each other and in which an element is in each case received, this such that a longitudinal direction of the element runs parallel to the longitudinal direction of the support structure in which it is received. In an embodiment of the invention the displacing means are configured to displace the element in a direction running perpendicularly of the longitudinal direction of the support structures. This makes it possible to displace an element transversely of the longitudinal direction of the support structures, whereby the mutual parallelism of the elements is preserved.

The displacing means can in principle be embodied in any suitable manner. In an embodiment of the invention it is thus proposed that the displacing means comprise a forklift mechanism. In addition to the mechanism, such a forklift mechanism also comprises engaging means for an element, such as forks or other equivalent equipment. The forklift mechanism is able to displace an engaged element in the lying position in a vertical and/or horizontal direction relative to the deck and the support structures. A suitable forklift mechanism is a scissor mechanism. The embodiment with a forklift mechanism has the additional advantage that the support structures themselves are fixedly connected to the deck of the vessel. This requires little maintenance and is advantageous for the operational safety. It is however also possible to have the forklift mechanism engage on a support structure, particularly on support parts thereof.

Another embodiment of the invention is characterized in that the displacing means are configured to displace a support structure relative to the deck and parallel to the deck. In this embodiment a substantially whole support structure, optionally with an element received therein, is thus translated relative to the deck, and optionally also relative to other parallel support structures.

Yet another embodiment comprises a device wherein the displacing means are configured to displace a number of support structures collectively.

The displacing means for a support structure can in principle be embodied in any suitable manner, for instance as described above as a forklift mechanism. Another embodiment of the invention relates to a device wherein the displacing means comprise a guide which is connected to the deck and over which the support structures can slide in the direction running perpendicularly of the longitudinal direction of the support structures. It is possible here for all support structures to slide collectively over the guide, or for one or more support structures to be slid over the guide relative to other support structures.

The support parts can move over slide surfaces of the guide, although according to an embodiment of the invention it is also possible to provide a device wherein the guide comprises a rail guide.

As already noted above, the space on a deck of a vessel is limited. One of the intended advantages of the invented device is furthermore that elements stored on the deck can be moved within reach of a lifting crane. This prevents a larger lifting crane having to be used. The lifting crane itself can however form an additional space restriction for support structures which are moved in the direction of the lifting crane. It is therefore advantageous to characterize the device in an embodiment in that the support parts of a support structure in unloaded state, in which no element is present in the support parts, are rotatable around an axis running perpendicularly of the deck. The support parts have a certain width which is adapted to the transverse dimensions of an elongate element received therein. By providing the option to rotate the support parts of a support structure around a vertical axis the support parts can for instance be rotated through an angle of 90°. Hereby, they take up less space in the direction of movement of the support structure, which frees up space for a subsequent support structure.

Another embodiment of the assembly is characterized in that the support parts of a support structure in unloaded state, in which no element is present in the support parts, are collapsible in the direction running perpendicularly of the longitudinal direction of the support structure. This embodiment likewise achieves that, once an element has been lifted from a support structure by the lifting crane, the support parts take up less space in the direction of movement of the support structure, which frees up space for a subsequent support structure.

The number of support structures in a device according to the invention can in principle be chosen freely and preferably amounts to more than 4, more preferably more than 8, and most preferably more than 16 support structures. The support structures are configured to each support an elongate element, for instance during transport over sea. According to an embodiment of the invention, a support surface of a support part is for this purpose curved such that it connects to a peripheral part of an element received in the support structure, and more preferably connects fittingly to a peripheral part of an element received in the support structure.

With the invented device an element to be lifted by a lifting crane can be moved within reach of the lifting crane provided on the deck of a floating device. In an embodiment of the device a lifting crane for taking up an element is for this purpose provided, wherein the displacing means are further configured to displace the element in the direction of the lifting crane.

In a suitable method a number of elongate elements is supported in lying position on the deck by a number of elongate support structures which run mutually parallel and each comprise two support parts, placed at a mutual distance in a longitudinal direction of the support structure and connected to the deck, for peripheral parts of an element, wherein an element to be lifted is displaced relative to the deck and parallel to the deck in the lying position.

According to an embodiment, the element is displaced in a direction running perpendicularly of the longitudinal direction of the support structures, and preferably with a forklift mechanism.

Another embodiment relates to a method wherein a support structure is displaced relative to the deck and parallel to the deck, and preferably a number of support structures collectively. According to yet another embodiment, the support structures can here be slid over a guide connected to the deck in the direction running perpendicularly of the longitudinal direction of the support structures.

In order to free up space, a method is according to another embodiment provided wherein the support parts of a support structure in unloaded state, in which no element is present in the support parts, are rotated around an axis running perpendicularly of the deck, particularly after an element received the support structure has been moved within reach of the lifting crane and has been taken up with the lifting crane. The rotation makes it possible to move a subsequent support structure provided with an element in the direction and within reach of the lifting crane, after which the process is repeated.

Another embodiment, which has the same objective, provides a method in which the support parts of a support structure in unloaded state, in which no element is present in the support parts, are collapsed in the direction running perpendicularly of the longitudinal direction of the support structure. In this embodiment an element to be taken up is also displaced in the direction of the lifting crane so that it moves within reach of the lifting crane and can be taken up.

The elongate elements can for instance comprise hollow tubular elements. The dimensions of the elements are less important in principle, but the advantages of the invention are most clearly manifest in elongate elements with a length amounting to more than 20 m, preferably more than 40 m, still more preferably more than 50 m; and with a transverse dimension, for instance a diameter in the case of a tubular element, amounting to more than 5 m, more preferably more than 10 m, and still more preferably more than 15 m.

Finally, it is stated that the embodiments of the invention described in this patent application can be combined in any possible combination of these embodiments, and that each embodiment can individually form the subject-matter of a divisional patent application.

### BRIEF DESCRIPTION OF THE FIGURES

The invention will now be elucidated in more detail with reference to the accompanying figures, without otherwise being limited thereto. In the figures:
Fig. 1 is a schematic perspective view of a jack-up platform provided with a support structure for lying support of monopiles, and of a lifting crane with which a monopile can be taken up;
Fig. 2A is a schematic front view of a device according to a first embodiment of the invention in a first position;
Fig. 2B is a schematic front view of a device according to the first embodiment of the invention in a second position;
Fig. 3A is a schematic perspective view of a device according to a second embodiment of the invention and provided with a number of monopiles;
Fig. 3B is a schematic perspective view of a device according to the second embodiment of the invention shown in figure 3A without the monopiles;
Fig. 4A is a schematic perspective view of a detail of the second embodiment shown in figures 3A and 3B;
Fig. 4B is a schematic perspective view of a detail of the second embodiment;
Fig. 5A is a schematic perspective view of a device according to a third embodiment of the invention and provided with a number of monopiles; and, finally
Fig. 5B is a schematic perspective view of a device according to the third embodiment of the invention and provided with monopiles.

### DETAILED DESCRIPTION OF EXEMPLARY EMBODIMENTS

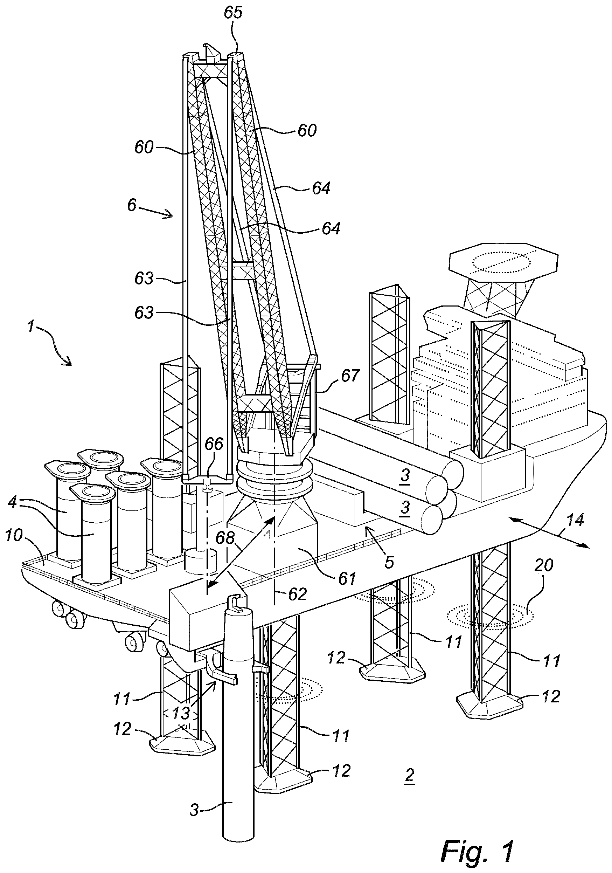

Referring to figure 1, an installation jack-up platform 1 is shown for placing a monopile 3 on a seabed 2. Platform 1 is likewise suitable for placing other elongate elements, such as the transition pieces 4 of a wind turbine mast stored on deck 10. Such a transition piece 4 is arranged on a monopile 3 arranged in seabed 2 as transition to a wind turbine mast (not shown). Jack-up platform 1 can navigate independently and is fixed at a desired position at the destination by lowering of a number of spud poles 11 onto seabed 2. Deck 10 of platform 1 is here lifted from the water so that it comes to lie metres above the water surface 20. Spud poles 11 can be provided with spud cans 12 for preventing spud poles 11 from sinking further into seabed 2.

Components to be placed, for instance a number of transition pieces 4 and monopiles 3, are provided on deck 10 of platform 1. Monopiles 3 are received in a device 5, an embodiment of which will be further elucidated below. Monopiles 3 can have considerable dimensions, with lengths of for instance 60 m and diameters of 6 m and more.

Deck 10 of jack-up platform 1 is also provided with a lifting crane 6 with double boom 60 for taking up the monopiles 3. Lifting crane 6 is rotatable around a base 61, around a substantially vertical axis 62, and further provided with hoisting cables 63 which can be taken in or payed out over a top part 65 of lifting crane 6 with winches (not shown) and which are connected at a free outer end to a hoisting block 66 with hook, by which a monopile 3 or other element can be taken up, if desired with interposing of a hoisting yoke with hoisting slings. The angular position of boom 60 can if desired be adjusted by a set of traction cables 64 which connect top part 65 to a support 67 provided on base 61. Traction cables 64 can be taken in or payed out using winches (not shown). When taken in, boom 60 is luffed in, while boom 60 is lowered when traction cables 64 are payed out. The reach of lifting crane 6 is given for a load with a determined weight by the maximum possible horizontal distance 68 between central axis 62 of base 61 and the position of hoisting yoke 66 in which hoisting crane 6 is still just stable with this load.

For the sake of completeness, deck 10 of platform 1 can also be provided with a gripping construction 13 for a monopile 3 taken up from support structure 5 by lifting crane 6. Gripping construction 13 is configured to engage a monopile 3 hanging from hoisting crane 6 and to guide it during the lowering to seabed 2. Gripper construction 13 is however not important for the present invention.

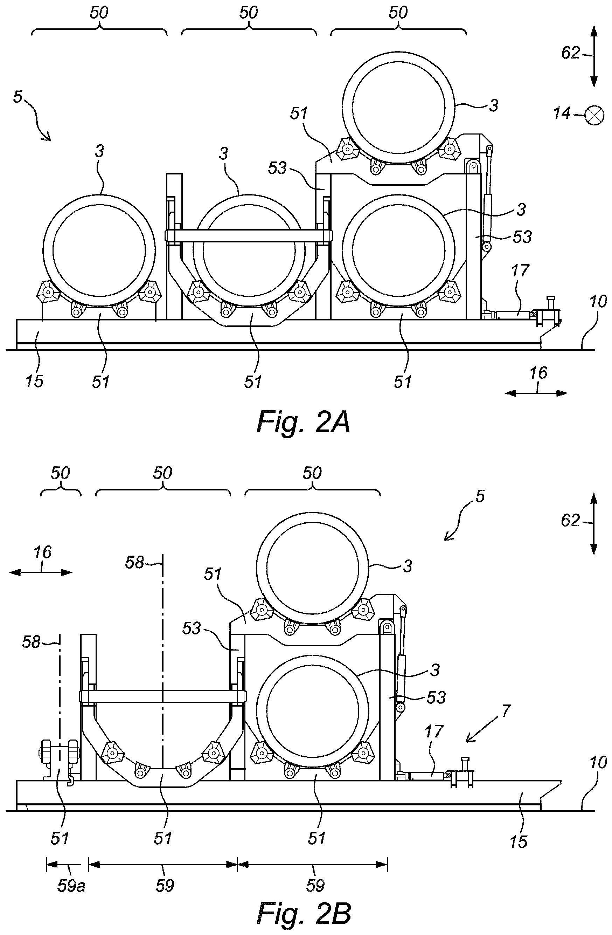

An embodiment of the invention relates to a device 5 for supporting a number of elongate monopiles 3, which form hollow tubular elements, in lying position on deck 10 of jack-up platform 1. In the lying position monopiles 3 extend substantially horizontally, in other words substantially parallel to deck 10. A first embodiment shown in figures 2A and 2B comprises a number of elongate support structures 50 running mutually parallel along an athwartship direction 14. Support structures 50 can of course also be oriented in a different direction. Each support structure 50 is connected (directly or indirectly) to deck 10, for instance via a rail connection 15, shown in figures 2A and 2B. Support structures 50 can if desired also be stacked on each other, such as the two support structures 50 shown on the right of figures 1 and 2.

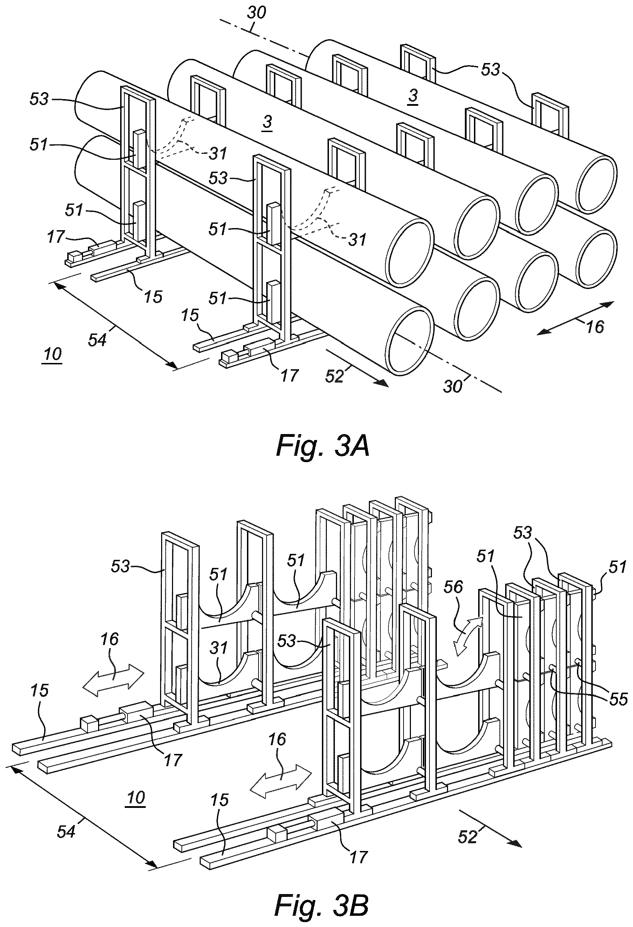

A support structure 50 comprises a support part 51 which has a U-shaped cross-section. The side arms of the U-shape provide for a horizontal stabilization of a monopile 3 received therein, while a bottom surface of each support part 51 provides for a vertical stabilization of a monopile 3 received therein. As can be seen clearly in figures 3A and 3B, a longitudinal direction 30 of monopile 3 runs substantially parallel to the longitudinal direction 52 of support structure 50 in which monopile 3 is received. Support parts 51 are received between vertically oriented uprights 53 which transmit the forces caused by monopiles 3 in support parts 51 to rail guide 15 and on to deck 10 of the jack-up platform. In the shown embodiments each support structure 5 comprises two support parts 51, placed at mutual distance 54 in the longitudinal direction 52 of support structure 50, although the invention is not limited thereto. A support structure 50 can thus comprise only one support part 51, or conversely more than two. It is also possible to provide a support part 51 running continuously over the distance 54. Each support part 51 has a support surface shaped substantially like a peripheral part 31 of a monopile 3 received or to be received therein.

According to the invention, device 5 comprises displacing means for displacing a monopile 3 received in a support structure 50 relative to deck 10, this parallel to deck 10 and in the lying position, particularly in a direction 16 running perpendicularly of the longitudinal direction 52 of support structures 50. This is also the direction in which rail guide 15 extends. It thus becomes possible to displace a monopile 3 transversely of the longitudinal direction 52 of support structures 50. In this way the mutual parallelism of monopiles 3 is preserved, which is useful when monopiles 3 have to be taken up by lifting crane 6.

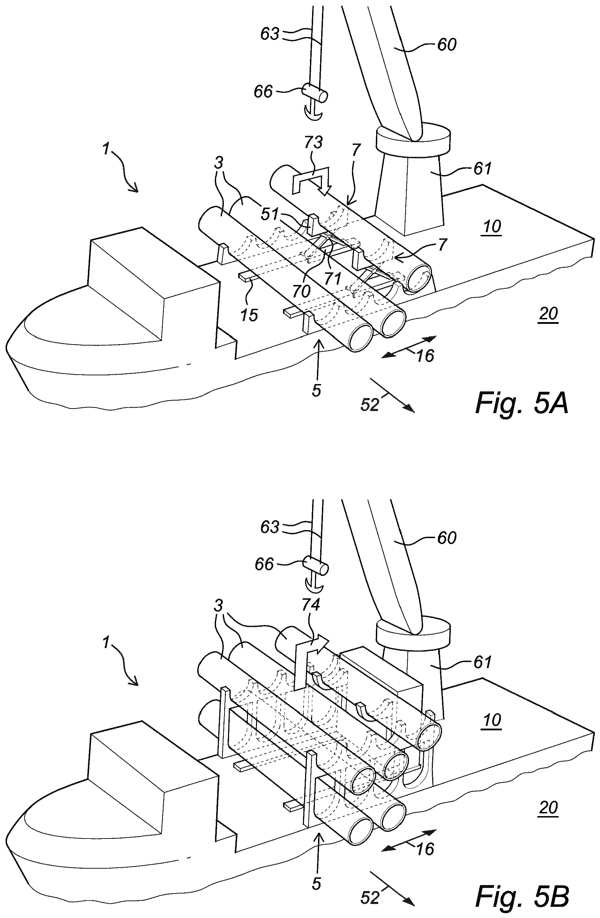

A third embodiment of the displacing means is shown in figures 5A and 5B and comprises a forklift mechanism 7. Such a forklift mechanism 7 can comprise a base 70 which is slidable over rail guide 15 in the direction 16 and on which a scissor mechanism 71 is mounted. An engaging means for monopile 3 is formed by a support part 51 which is connected to an upper side of scissor mechanism 71. Forklift mechanisms 7 are able to displace a monopile 3 received in support parts 51 in a vertical direction, wherein this displacement can be performed both in upward direction and in the direction of cover 10. It is also possible to slide forklift mechanisms 7 over rail guide 15 and thus realize a horizontal displacement of a monopile 3 relative to deck 10 and optionally relative to adjacent support structures 50. The displacement options are indicated with the arrows 73 and 74 shown in figures 5A and 5B. In this embodiment support structures 50 themselves can be fixedly connected to deck 10. This embodiment enables a monopile 3 received in a support structure 50 to be displaced in the direction of lifting crane 6 in order to move monopile 3 within reach of lifting crane 6.

A second embodiment of the invention is shown in figures 3A and 3B. In this embodiment displacing means 7 are configured to displace a support structure 50 relative to deck 10 and parallel to deck 10 over rail guide 15. In this embodiment a substantially whole support structure 50, optionally with a monopile 3 received therein, is thus translated relative to deck 10. The displacing means comprise the rail guide 15 connected to deck 10, and further a number of hydraulic piston cylinders 17 which are connected to a hydraulic circuit (not shown). These piston cylinders 17 are connected on a cylinder side to a fixed point, such as deck 10 or rail guide 15, and on the piston side to a support structure 50 or a number of linked support structures 50. By extending or conversely retracting the cylinder piston, a support structure 50 can be moved over rail guide 15 in the direction 16. In figure 3A the cylinder piston is in retracted position and support structures 50 are on the left. In figure 3B the cylinder piston has been extended and support structures 50 were slid to the right, for instance in the direction of a lifting crane 6 (not shown). In order to leave space on the right-hand side of support structures 50 the support parts 51 of the three support structures 50 furthest to the right are in this embodiment rotated in the direction of arrow 56 around a horizontal axis 55. Support parts 51 thus take up less space in the direction of movement 16, whereby a subsequent support structure 50 can move closer to the lifting crane 6 (not shown).

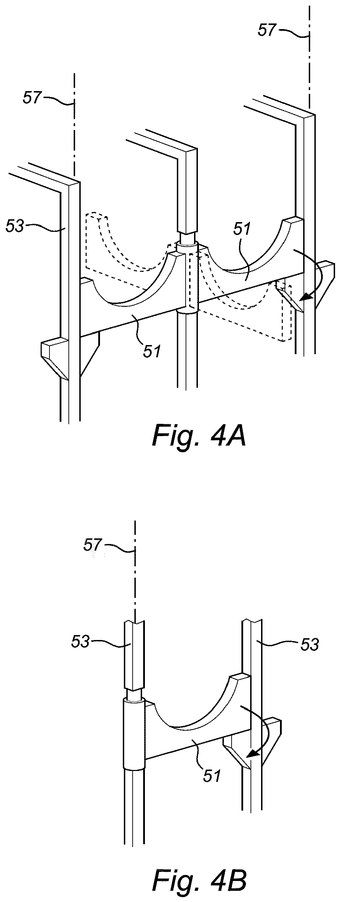

Other options for freeing up space by means of a rotation are shown in figures 4A and 4B, according to the second embodiment. In figure 4A a rotation is enabled of two support parts 51 simultaneously around a, this time, vertical axis 57, from a position shown with full lines, in which two monopiles 3 can be received in support parts 51, to the position shown with broken lines, in which supports 51 can be pushed against each other like a concertina. Vertical axis 57 coincides with the longitudinal direction of an upright 53. Figure 4B shows a rotation of one support part 51 around an upright 53 as an option. It will be apparent that a plurality of embodiments is available to the skilled person.

Referring to figures 2A and 2B, a first embodiment is shown in which support parts 51 can be rotated around their own vertical axis 58 with the same effect as described above. In the shown embodiment the lifting crane 6 (not shown) is situated on the left-hand side of device 5. Support structures 50 were slid with piston cylinders 71 from a position shown in figure 2A to the left, in the direction of the lifting crane, in order to move monopiles 3 within reach of lifting crane 6. In order to create space for this the support structure 5, or at least the support parts 51 thereof, furthest to the left was rotated around axis 58 so that the width 59 taken up by the support part 51 furthest to the left in the direction of movement 16 is reduced to a smaller occupied width 59a.

## Claims

1. Device (5) for supporting a number of elongate elements (3) in lying position on a deck (10) of a vessel (1), comprising a number of elongate support structures (50) which run mutually parallel and each comprise two support parts (51), placed at a mutual distance in a longitudinal direction (52) of the support structure (50) and connected to the deck (10), for peripheral parts (31) of an element (3), wherein the device (5) further comprises displacing means (7), configured to displace an element (3) received in a support structure (50) relative to the deck (10) and parallel to the deck (10) in the lying position, **characterized in that** the support parts (51) of a support structure (50) in unloaded state, in which no element (3) is present in the support parts (51), are rotatable around an axis (58) running perpendicularly of the deck (10) or are collapsible in a direction (16) running perpendicularly of the longitudinal direction (52) of the support structure (50).

2. Device according to claim 1, wherein the displacing means are configured to displace the element in a direction running perpendicularly of the longitudinal direction (52) of the support structures (50).

3. Device according to claim 1 or 2, wherein the displacing means comprise a forklift mechanism.

4. Device according to any one of the foregoing claims, wherein the displacing means are configured to displace a support structure relative to the deck and parallel to the deck.

5. Device according to claim 4, wherein the displacing means are configured to displace a number of support structures collectively.

6. Device according to any one of the foregoing claims, wherein the displacing means comprise a guide which is connected to the deck and over which the support structures can slide in the direction running perpendicularly of the longitudinal direction of the support structures.

7. Device according to any one of the foregoing claims, wherein a support surface of a support part is for this purpose curved such that it connects to a peripheral part of an element received in the support structure.

8. Device according to any one of the foregoing claims, further comprising a lifting crane for taking up an element, and wherein the displacing means are configured to displace the element in the direction of the lifting crane.

9. Method for moving within reach of a lifting crane (6) provided on the deck (10) of a vessel (1) an element (3) to be lifted by the lifting crane (6), wherein a number of elongate elements (3) is supported in lying position on the deck (10) by a number of elongate support structures (50) which run mutually parallel and each comprise two support parts (51), placed at a mutual distance in a longitudinal direction (52) of the support structure (50) and connected to the deck (10), for peripheral parts (31) of an element (3), wherein an element (3) to be lifted is displaced relative to the deck (10) and parallel to the deck (10) in the lying position, **characterized in that** the support parts (51) of a support structure (50) in unloaded state, in which no element (3) is present in the support parts (51), are rotated around an axis (58) running perpendicularly of the deck (10) or are collapsed in a direction (16) running perpendicularly of the longitudinal direction (52) of the support structure (50).

10. Method according to claim 9, wherein the element is displaced in a direction running perpendicularly of the longitudinal direction of the support structures.

11. Method according to claim 9 or 10, wherein the element is displaced with a forklift mechanism.

12. Method according to any one of the foregoing claims, wherein a support structure is displaced relative to the deck and parallel to the deck.

13. Method according to claim 12, wherein a number of support structures is displaced collectively.

14. Method according to any one of the claims 9-13, wherein the support structures are slid over a guide connected to the deck in the direction running perpendicularly of the longitudinal direction of the support structures.

15. Method according to any one of the claims 9-14, wherein the element is displaced in the direction of the lifting crane.

## Patentansprüche

1. Vorrichtung (5) zum Stützen einer Anzahl länglicher Elemente (3) in liegender Position auf einem Deck (10) eines Schiffes (1), aufweisend eine Anzahl länglicher Stützstrukturen (50), die zueinander parallel verlaufen und jeweils zwei Stützteile (51) umfassen, welche in einer Längsrichtung (52) der Stützstruktur (50) in einem gegenseitigen Abstand angeordnet und mit dem Deck (10) verbunden sind, für Umfangsteile (31) eines Elements (3), wobei die Vorrichtung (5) ferner Verschiebeeinrichtungen (7) aufweist, die ausgebildet sind, um ein in einer Stützstruktur (50) aufgenommenes Element (3) relativ zu dem Deck (10) und parallel zu dem Deck (10) in der liegenden Position zu verschieben, **dadurch gekennzeichnet, dass** die Stützteile (51) einer Stützstruktur (50) in unbeladenem Zustand, in dem sich kein Element (3) in den Stützteilen (51) befindet, um eine senkrecht zu dem Deck (10) verlaufende Achse (58) drehbar sind oder in einer senkrecht zu der Längsrichtung (52) der Stützstruktur (50) verlaufenden Richtung (16) zusammenklappbar sind.

2. Vorrichtung nach Anspruch 1, wobei die Verschiebeeinrichtungen ausgebildet sind, um das Element in einer senkrecht zur Längsrichtung (52) der Stützstrukturen (50) verlaufenden Richtung zu verschieben.

3. Vorrichtung nach Anspruch 1 oder 2, wobei die Verschiebeeinrichtungen einen Gabelstaplermechanismus umfassen.

4. Vorrichtung nach einem der vorherigen Ansprüche, wobei die Verschiebeeinrichtungen ausgebildet sind, um eine Stützstruktur relativ zum Deck und parallel zum Deck zu verschieben.

5. Vorrichtung nach Anspruch 4, wobei die Verschiebeeinrichtungen ausgebildet sind, um eine Anzahl von Stützstrukturen gemeinsam zu verschieben.

6. Vorrichtung nach einem der vorherigen Ansprüche, wobei die Verschiebeeinrichtungen eine mit dem Deck verbundene Führung aufweisen, über die die Stützstrukturen in der zur Längsrichtung der Stützstrukturen senkrecht verlaufenden Richtung gleiten können.

7. Vorrichtung nach einem der vorherigen Ansprüche, wobei eine Stützfläche eines Stützteils in der Weise gekrümmt ist, dass ein peripherer Teil eines in der Stützstruktur aufgenommenen Elements auf ihr aufliegt.

8. Vorrichtung nach einem der vorherigen Ansprüche, welche ferner zum Aufnehmen eines Elements einen Hebekran aufweist, und wobei die Verschiebeeinrichtungen ausgebildet sind, um das Element in Richtung des Hebekrans zu verschieben.

9. Verfahren zum Bewegen eines von einem Hebekran (6) anzuhebenden Elements (3) innerhalb der Reichweite eines auf dem Deck (10) eines Schiffes (1) vorgesehenen Hebekrans (6), wobei eine Anzahl länglicher Elemente (3) in liegender Position auf dem Deck (10) durch eine Anzahl länglicher Stützstrukturen (50) gestützt wird, welche zueinander parallel verlaufen und jeweils zwei Stützteile (51) umfassen, welche in einer Längsrichtung (52) der Stützstruktur (50) in einem gegenseitigen Abstand angeordnet und mit dem Deck (10) verbunden sind, für Umfangsteile (31) eines Elements (3), wobei ein anzuhebendes Element (3) relativ zum Deck (10) und parallel zum Deck (10) in der liegenden Position verschoben wird, **dadurch gekennzeichnet, dass** die Stützteile (51) einer Stützstruktur (50) in unbeladenem Zustand, in dem sich kein Element (3) in den Stützteilen (51) befindet, um eine senkrecht zum Deck (10) verlaufende Achse (58) gedreht oder in einer senkrecht zur Längsrichtung (52) der Stützstruktur (50) verlaufenden Richtung (16) zusammengeklappt werden.

10. Verfahren nach Anspruch 9, wobei das Element in einer senkrecht zur Längsrichtung der Stützstrukturen verlaufenden Richtung verschoben wird.

11. Verfahren nach Anspruch 9 oder 10, wobei das Element mittels einem Gabelstaplermechanismus verschoben wird.

12. Verfahren nach einem der vorherigen Ansprüche, wobei eine Stützstruktur relativ zum Deck und parallel zum Deck verschoben wird.

13. Verfahren nach Anspruch 12, wobei eine Anzahl von Stützstrukturen gemeinsam verschoben wird.

14. Verfahren nach einem der Ansprüche 9 bis 13, wobei die Stützstrukturen über eine mit dem Deck verbundene Führung in der Richtung senkrecht zur Längsrichtung der Stützstrukturen geschoben werden.

15. Verfahren nach einem der Ansprüche 9 bis 14, wobei das Element in Richtung des Hebekrans verschoben wird.

## Revendications

1. Dispositif (5) destiné à supporter un certain nombre d'éléments allongés (3) en position allongée sur un pont (10) d'un navire (1), comprenant un certain nombre de structures de support allongées (50) qui s'étendent mutuellement parallèlement et chacune comprend deux parties de support (51), placées à une distance mutuelle dans une direction longitudinale (52) de la structure de support (50) et reliées au pont (10), destinées à des parties périphériques (31) d'un élément (3), dans lequel le dispositif (5) comprend, en outre, des moyens de déplacement (7), configurés de manière à déplacer un élément (3) reçu sur une structure de support (50) par rapport au pont (10) et parallèlement au pont (10) dans la position allongée, **caractérisé en ce que** les parties de support (51) d'une structure de support (50) dans l'état non chargé, dans lequel aucun élément (3) n'est présent sur les parties de support (51), peuvent tourner autour d'un axe (58) s'étendant perpendiculairement au pont (10) ou peuvent être repliées dans une direction (16) s'étendant perpendiculairement à la direction longitudinale (52) de la structure de support (50).

2. Dispositif selon la revendication 1, dans lequel les moyens de déplacement sont configurés de manière à déplacer l'élément dans une direction s'étendant perpendiculairement à la direction longitudinale (52) des structures de support (50).

3. Dispositif selon la revendication 1 ou 2, dans lequel les moyens de déplacement comprennent un mécanisme de levage à fourche.

4. Dispositif selon l'une quelconque des revendications précédentes, dans lequel les moyens de déplacement sont configurés de manière à déplacer une structure de support par rapport au pont et parallèlement au pont.

5. Dispositif selon la revendication 4, dans lequel les moyens de déplacement sont configurés de manière à déplacer un certain nombre de structures de support de manière collective.

6. Dispositif selon l'une quelconque des revendications précédentes, dans lequel les moyens de déplacement comprennent un guide qui est relié au pont et au-dessus duquel les structures de support peuvent glisser dans la direction s'étendant perpendiculairement à la direction longitudinale des structures de support.

7. Dispositif selon l'une quelconque des revendications précédentes, dans lequel une surface de support d'une partie de support est courbée dans ce but de telle sorte qu'elle se couple à une partie périphérique d'un élément reçu sur la structure de support.

8. Dispositif selon l'une quelconque des revendications précédentes, comprenant, en outre, une grue de levage afin de soulever un élément, et dans lequel les moyens de déplacement sont configurés de manière à déplacer l'élément dans la direction de la grue de levage.

9. Procédé de déplacement à portée d'une grue de levage (6) agencée sur le pont (10) d'un navire (1) d'un élément (3) destiné à être soulevé par la grue de levage (6), dans lequel un certain nombre d'éléments allongés (3) sont supportés dans une position allongée sur le pont (10) par un certain nombre de structures de support allongées (50) qui s'étendent mutuellement parallèlement et chacune comprend deux parties de support (51), placées à une distance mutuelle dans une direction longitudinale (52) de la structure de support (50) et reliées au pont (10), destinées à des parties périphériques (31) d'un élément (3), dans lequel un élément (3) à soulever est déplacé par rapport au pont (10) et parallèlement au pont (10) dans la position allongée, **caractérisé en ce que** les parties de support (51) d'une structure de support (50) dans un état non chargé, dans lequel aucun élément (3) n'est présent sur les parties de support (51), sont tournées autour d'un axe (58) s'étendant perpendiculairement au pont (10) ou sont repliées dans une direction (16) s'étendant perpendiculairement à la direction longitudinale (52) de la structure de support (50).

10. Procédé selon la revendication 9, dans lequel l'élément est déplacé dans une direction s'étendant perpendiculairement à la direction longitudinale des structures de support.

11. Procédé selon la revendication 9 ou 10, dans lequel l'élément est déplacé avec un mécanisme de levage à fourche.

12. Procédé selon l'une quelconque des revendications précédentes, dans lequel une structure de support est déplacée par rapport au pont et parallèlement au pont.

13. Procédé selon la revendication 12, dans lequel un certain nombre de structures de support sont déplacées de manière collective.

14. Procédé selon l'une quelconque des revendications 9 à 13, dans lequel les structures de support sont glissées au-dessus d'un guide couplé au pont dans la direction s'étendant perpendiculairement à la direction longitudinale des structures de support.

15. Procédé selon l'une quelconque des revendications 9 à 14, dans lequel l'élément est déplacé dans la direction de la grue de levage.
